# EUROPEAN PATENT SPECIFICATION

(11) **EP 2 479 006 B1**
(45) Date of publication and mention of the grant of the patent: **07.08.2013**
(21) Application number: 12000347.0
(22) Date of filing: 20.01.2012
(51) Int. Cl.: B25B 15/00, F01M 11/04

(54) **Threaded plug and screwdriver device**
Gewindestopfen- und Schraubendrehervorrichtung
Bouchon fileté et dispositif formant tournevis

(30) Priority: 24.01.2011 IT RN20110005
(43) Date of publication of application: 25.07.2012
(73) Proprietor: Polykap S.R.L., 47899 Serravalle (SM)
(72) Inventor: Luppi, Davide, 40122 Bologna (BO) (IT)
(74) Representative: Montebelli, Marco

(56) References cited:
- EP-A1- 1 031 740
- WO-A1-2010/054169
- CH-A- 113 786
- DE-C1- 4 019 223
- FR-A- 921 134
- GB-A- 191 319 638
- US-A1- 2002 162 407
- US-A1- 2008 128 206
- US-A1- 2010 206 139

## Description

This invention relates to a device comprising a threaded plug and screwdriver for general industrial use, as known for example from US-A-2010/0,206,139.

In the prior art there are already threaded plugs, made of plastic material, intended for industrial use, designed to be inserted with forced screwing and tightening in a hole of a generic recipient unit. Such plugs are used for the most diverse purposes, including, for example, blocking holes, protecting them from any damage, covering them for functional or aesthetic reasons, making them airtight or watertight, marking them, hermetically sealing them, etc.

A prior art type of such plugs has an overall single-piece structure, having a longitudinal axis of symmetry. It basically has three identifiable fundamental parts: a body, a flange and a head, parts which are positioned one after another longitudinally relative to the axis of symmetry.

The plug body is substantially cylindrical, hollow inside, and has a profile wall in which an outer thread is made, this thread being designed to couple with a matching thread made in the hole which will receive the plug.

The flange is basically ring-shaped, and is interposed between the body and the head. It projects transversally to the axis of the plug relative to both the body and the head. When the plug is used the flange is designed to make contact with a section of the surface of the unit surrounding the hole, applying a thrust action on it as a result of screwing, the thrust action being more intense the higher the tightening torque used for forced screwing of the plug into the hole.

The head has the shape of a tubular solid with a prismatic profile, extending over a short axial length, projecting from the opposite side of the flange to that from which the body projects.

The tubular solid has a large inner cavity which, laterally, is surrounded by a thick wall, having the shape of a closed ring and with even, constant thickness. The inner cavity also has a closed end, formed by the flange. A large opening located at the top of the tubular solid allows access from outside to the inner cavity of the plug head.

In the prior art plugs described above the head has various types of coupling surfaces on which to engage an operating tool for forced screwing or unscrewing of the plug.

Of said coupling surfaces: first coupling surfaces are on the faces of the outer surface of the ring-shaped wall of the tubular solid; second coupling surfaces are in contrast provided by prominent protrusions contained in the cavity.

More particularly, the first outer surfaces are substantially at right angles to the plane in which the flange lies and are shaped and sized in such a way that they can be coupled with an operating tool consisting for example of a standardised, standard-production open-ended wrench or a socket wrench normally used for tightening steel bolts.

The operating tools indicated above - irrespective of their technological production form - always operate by encompassing from the outside the outer surface of the tubular body of the head and couple with that surface with some circumferential play which is always present and cannot be eliminated. The second coupling surfaces, which are in contrast provided by the parallel protrusions inside the cavity, instead together delimit an interposed slot or slit in which a further type of operating tool may be engaged, again of the standardised type for generic usage, in that case represented by a screwdriver which can engage in the slot so as to apply the force necessary for screwing/unscrewing the plug.

As already indicated, the plug is normally made of plastic material. The operating tools of the standard type are in contrast made of high-strength steel and are sized in such a way that they can apply tightening torques whose intensity is suitable for tightening steel bolts fully home. Consequently, due to the high capacity for force which can be generated using these tools, when they are used for fitting/removing plastic plugs, the intensity of the tightening torque must be very carefully modulated so as to always guarantee the correct compromise between plug tightening suitable for the specific functions required of it, and tightening which is not excessive and which is below a limit value which could cause permanent damage to the plug head; damage which is also contributed to by the non-eliminable circumferential play with which the operating tool engages with the first and/or with the second coupling surfaces previously defined.

In practice, when fitting the plugs it may be the case that in order to stay relatively safe regarding the possibility of damaging the plug, the fitter may tend to tighten the plug in a cautious way, less than is necessary to guarantee for example optimum hole airtight or watertight sealing.

That may result in subsequent problems which could lead to damage not just to the mechanical unit which receives the plug, but also, indirectly, to the machine or plant to which that unit is operatively linked.

On the other hand, over-tightening of the plug may cause other, no less serious, problems. In fact, although it is true that a high level of tightening, for example enough to permanently deform the head of the plug, could indirectly provide assurances about the efficiency of the airtight or watertight seal of the plug, it is equally true that if during the operating life of the plug in use it becomes necessary to remove the plug (for example for routine or extraordinary maintenance of the unit or of the parts of the machine which use said unit) any permanent deformation of the plug could even prevent application of the operating wrench, preventing the consequent correct unscrewing and removal. Paradoxically all of that may make routine maintenance work very laborious and expensive, sometimes with the aggravating circumstance that added to such difficulties operating the plug there could be further difficulties operating the tools due to the location of the plug - relative to the unit and/or the plant which uses the plug.

The main aim of this invention is to overcome the above-mentioned disadvantages by providing a system comprising a plug and a screwdriver in which the plug screwing and tightening operations can be carried out using active surfaces of the plug which are inside the annular wall of the tubular solid forming the head of the plug, as well as oblique relative to the plug axis; and in which the screwdriver is equipped with a head suitable for operating with direct mating coupling with such surfaces, without play.

The automatic and total elimination of play has the advantage of also allowing - all other conditions being equal - an increase in the tightening torque which can be applied, without running the risk of damaging the plastic surfaces of the plug.

The fact that the tightening surfaces are located inside the cavity also allows the further advantage of requiring a smaller plug operating space than that usually needed for prior art applications: which also facilitates improved reachability of the plug in use during maintenance operations.

The mating coupling on oblique surfaces, as well as guaranteeing automatic zeroing of any play, indirectly allows an increase in the local thickness of the annular wall of the tubular solid. That contributes to the further increase in the tightening intensity which can be applied to the plug, without damaging it.

The technical features of this invention, in accordance with the above aims, are clear from the content of the claims herein, in particular claim 1, and from any of the claims directly or indirectly dependent on claim 1.

The advantages of this invention are more apparent in the detailed description which follows, with reference to the accompanying drawings which illustrate preferred, non-limiting embodiments of the invention, in which:
- Figures 1, 2 and 3 are respectively an elevation view, a top plan view and a side view of a plug made according to the invention;
- Figure 4 is a perspective view showing the plug in its entirety;

- Figure 5 is a cross-section of the plug in the plane of the line labelled A - A in Figure 2;
- Figure 6 is a perspective assembly view of a screwdriver for screwing/unscrewing the plug;
- Figure 7 is a top plan view of the screwdriver;
- Figures 8 and 9 are cross-sections of the screwdriver in the planes of the lines labelled A - A and C - C in Figure 7;

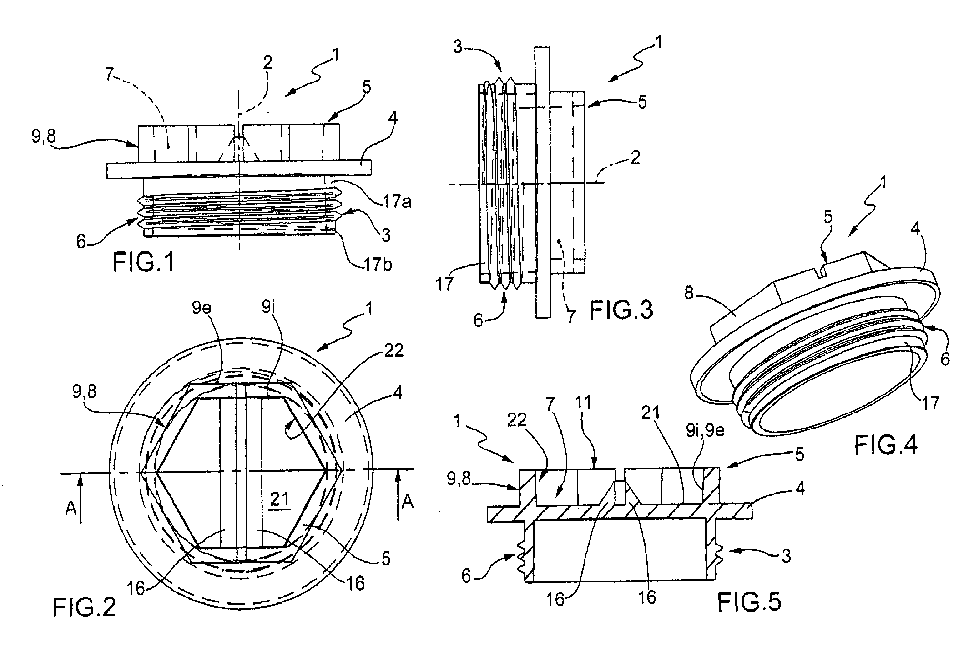

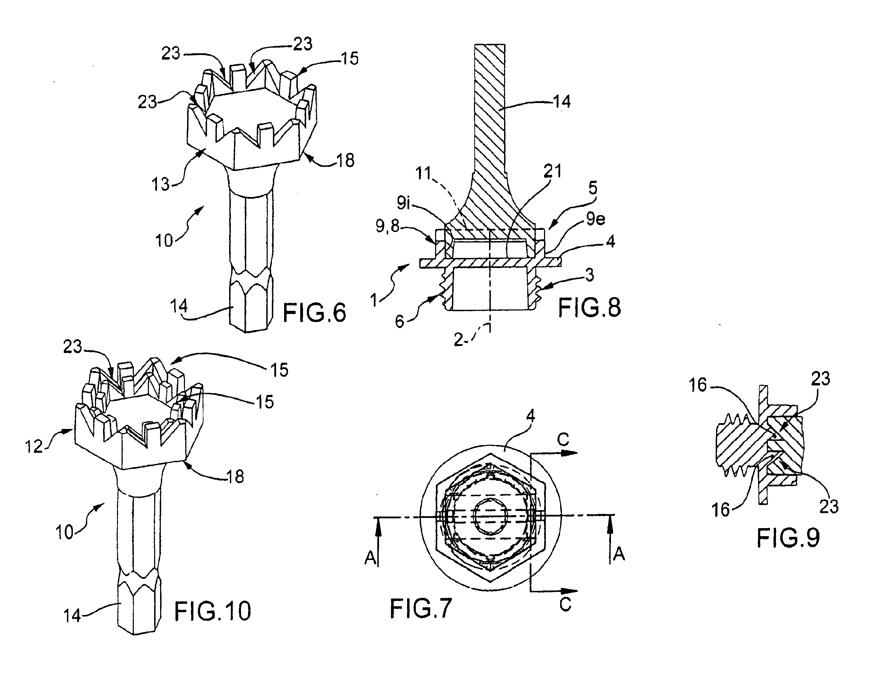

- Figure 10 is a perspective assembly view of an alternative embodiment of a detail of the invention. With reference to the accompanying drawings, in Figures 1, 2, 3 the numeral 1 denotes in its entirety a threaded plug 1, intended to be inserted with forced screwing in a hole made in a generic receiving unit, not shown in the accompanying drawings. The plug 1 - preferably made of plastic material - basically comprises a single-piece structure, having a longitudinal axis 2 of symmetry, and formed by: a body 3, a flange 4 and a head 5, which are positioned in an orderly fashion one after another along the axis 2, with the flange 4 interposed between the body 3 and the head 5.

The body 3 (as can be seen in figures 4,5,8) is hollow inside and, on the outside, has a thread 6, which it is assumed will mate with a matching inner thread in the hole in the unit that will receive the plug 1. The thread 6 is interposed between two smooth cylindrical collars 17a and 17b, one 17a of which is adjacent to the flange 4, while the other 17b is made at one end of the body 3 far from the flange 4.

By comparing figures 2, 4 and 5 it can be seen that the head 5 has the shape of a prismatic tubular solid 8, with a polygonal profile, which in this particular case is hexagonal. The tubular solid 8 extends longitudinally relative to the axis 2 of the plug 1 over a short length, projecting from the flange 4 on the opposite side of the flange to that from which the body 3 projects.

The tubular solid 8 has an inner cavity 7 which, laterally, is surrounded by a thick wall 9, having the shape of a closed ring; and which is inferiorly delimited by a closed bottom surface 21, formed by the flange 4. At the top of the tubular solid 8 there is an opening 11 allowing access to the inner cavity 7 of the plug head 5.

More particularly, on the outside of the wall 9 of the tubular solid 8 which surrounds the cavity 7 there is a lateral surface 9e which is substantially at a right angle to the plane in which the flange 4 lies, and on the inside of the wall there is an inner lateral surface 9i, correspondingly polygonal, which is oblique relative to the axis 2 of the cavity 7, diverging from it in the direction of travel along the axis 2 from the body 3 to the head 5 of the plug 1.

The plug 1, when fitted in place, is intended to operate in conjunction with a screwdriver 10, illustrated in its entirety in Figure 6, preferably also made of plastic material.

The screwdriver 10 basically comprises a head 12 which basically has the shape of a truncated pyramid, which is shaped to match the cavity 7 of the plug 1 head 5 and comprises outer surfaces 13, which can be coupled with the oblique inner surface 22 of the plug 1 head 5, with planar mating contact, direct and without play, that is to say, automatically taking up and eliminating the play, as figures 7 and 8 clearly show.

The screwdriver 10 also comprises a bar 14 which is fixed to and forms a single body with the head 13 and which is in an axial position relative to the head 13.

Preferably, the head 13 of the screwdriver 10 has the structure of a polyhedral cap 18, having shaped perimetric edges 15 equipped with indentations 23 made at all of the faces of the profile of the cap 18. The indentations 23 have a pattern matching and surrounding the profile of inner and transversal projections 16 of the plug cavity 7, which are clearly visible in figures 2, 5 and 9. The presence of the indentations 23 allows the screwdriver 10 to be associated with the plug 1, always and correctly, whatever the angle about the axis 2 of the plug 1 that the screwdriver 10 is presented at for assembly with the plug 1. That allows the undoubted advantage of making correct association of the screwdriver 10 with the plug 1 rapid, simple and always automatic. In the example in the accompanying drawings a screwdriver 10 with a single cap 18 is shown. However, it is possible to have an alternative embodiment which - as illustrated in figure 10 - has a plurality of concentric and coaxial caps 18, having perimeters which gradually decrease towards the centre of the cap 18, and which are all collectively supported by a single bar 14. Such a solution allows a single screwdriver 10 to be used for screwing a plurality of plugs 1 belonging to the same family, having a similar shape, but different dimensions. It should be noticed that such a screwdriver 10, which may be referred to as universal, automatically allows the selection and engagement of the edge 15 of the cap 18 in the set which on each occasion precisely matches the 11 plug 1 to be fitted. That not only brings the advantage of reducing the number of screwdrivers 10 which are required in a kit, but also makes simpler, faster and automatic the fitting operations in the assembly departments for products in which the plugs 1 are used. A further advantage is the fact that in such departments personnel with a lower level of professional skills may be used, at a reduced cost. It should also be noticed that the fact that the screwdriver 10 is made of plastic material allows the bar 14 to be given considerable twisting elasticity which allows, when the bar 14 is deformed under a load, automatic dissipation of any excess rotational torque applied to the plug 1. Obviously, with a shrewd selection of the deformability characteristics of the material used to make the screwdriver 10, and in particular the bar 14, and with an equally shrewd selection of the dimensions of the bar 14, it is quite easy to establish an intrinsic maximum value of the tightening torque which can be applied to the plug 1 in complete safety. Even simple visual observation of the extent of bar twisting allows the fitter to have a quite precise idea of the correctness of the tightening applied to the plug. Obviously, all of that avoids excessive torque values being reached, which could permanently deform, or in any case damage, the plug 1, considering any future unscrewing which may be required.

A further advantage of the device, again regarding the prevention of any damage to the plug 1, is also a direct result of the presence of the smooth cylindrical 17b collar 17 located at the end of the plug body 3 far from the flange 4. In fact, when fitting prior art plugs, as is well known, for correct plug 1 screwing in the receiving thread, it is necessary to carefully search for the start of the thread. That operation can be carried out in a relatively short unit time, which however, when multiplied by a large number of products to be assembled in mass-production, is no longer negligible. Moreover, if said operation is not performed correctly it is also quite likely that the plastic plug thread, when engaged for example in the thread of a hole made in a steel unit, will be permanently damaged, also causing, if forcibly fitted, subsequent defects in the hermetic seal.

The presence of the cylindrical collar 17b in the plug 1 means that the fitter does not need to search for the start of the thread. In practice it is sufficient to begin screwing the plug 1 - whatever its condition - in order to make the thread automatically engage correctly, without any action by the fitter, after rotating the plug at most through half a round angle.

Therefore, all of that allows any damage to the plug to be avoided, helping to guarantee its perfect seal and normal tightening, and also helping to reduce both the initial fitting times and the working times required for any subsequent maintenance.

The invention described above is susceptible of industrial application and may be modified and adapted in several ways without thereby departing from the scope of the inventive concept. Moreover, all details of the invention may be substituted by technically equivalent elements.

## Claims

1. Device comprising a threaded plug (1) and related screwdriver (10), in which the plug (1) comprises a single-piece structure having a longitudinal axis (2) of symmetry, and comprising a head (5), a body (3) with an outer thread (6), and a tightening flange (4) interposed between the head (5) and the body (3); the structure in which the head (5) has the shape of a tubular solid (8) projecting from the flange (4) in a direction parallel with the axis (2) of the plug (1), and comprising an inner cavity (7), accessible from the outside through one end of the solid (8), the cavity (7) being laterally surrounded by a non-circular surface (22) of an annular wall (9) which is oblique relative to the axis (2) of the cavity (7) and diverging from the axis (2) along a direction of travel from the body (3) to the head (5) of the plug (1), the screwdriver (10) comprising a shaped head (12) equipped with surfaces (13) which can be coupled at least with the oblique surface (22) with direct contact and automatic taking up of the coupling play, the device (1, 10) being **characterised in that** the head (12) of the screwdriver (10) comprises a cap-shaped structure (18) equipped with shaped perimetric edges (15) and at least a pair of walls (a) of the head (12) match the inner projections (16) of the plug inner cavity (7).

2. The device according to claim 1, **characterised in that** the surfaces (13) of the screwdriver (10) and the surface (22) of the wall (9) can be coupled with mating contact.

3. The device according to claim 1 or 2, **characterised in that** the head (12) of the screwdriver (10) basically has the shape of a truncated pyramid, shaped to match the shape of the cavity (7).

4. The device according to claim 1 or 2 or 3, **characterised in that** the screwdriver (10) comprises a bar (14) which is fixed to the head (12) and in an axial position.

5. The device according to claim 4, **characterised in that** the head (12) and the bar (14) are made together in a single body.

6. The device according to claim 1, **characterised in that** the shaped perimetric edges (15) of the cap (18) comprise indentations (23) shaped to match the inner projections (16) of the cavity (7).

7. The device according to claim 1 or 6, **characterised in that** the screwdriver (10) comprises a plurality of concentric caps (18), which can be selectively used for screwing in plugs (1) of different sizes using a single screwdriver (10).

8. The device according to any of the foregoing claims, **characterised in that** the screwdriver (10) is made of plastic material.

9. The device according to the foregoing claims, **characterised in that** the body (3) of the plug (1) comprises a smooth cylindrical collar (17b) preceding the start of the outer thread (6) of the body (3).

## Patentansprüche

1. Eine Vorrichtung, die einen Gewindestopfen (1) und einen entsprechenden Schraubendreher (10) umfasst, wobei der Stopfen (1) eine Struktur aus einem einzigen Stück umfasst, die eine Längssymmetrieachse (2) hat, und einen Kopf (5), einen Körper (3) mit einem Außengewinde (6) und einen Spannflansch (4), der sich zwischen dem Kopf (5) und dem Körper (3) befindet, umfasst; dabei hat die Struktur einen Kopf (5) in der Form eines röhrenförmigen Festkörpers (8), der in einer Richtung, die parallel zur Achse (2) des Stopfens (1) verläuft, aus dem Flansch (4) ragt, und umfasst einen inneren Hohlraum (7), der von außen durch ein Ende des Festkörpers (8) erreichbar ist / der Hohlraum (7) ist seitlich von einer nicht kreisförmigen Oberfläche (22) einer ringförmigen Wand (9) umgeben, die schräg zur Achse (2) des Hohlraums (7) steht und in einer Verlaufsrichtung vom Körper (3) zum Kopf (5) des Stopfens (1) von der Achse (2) abweicht, der Schraubendreher (10) umfasst einen geformten Kopf (12), der mit Oberflächen (13) ausgestattet ist, die zumindest mit den schrägen Oberflächen (22) in direktem Kontakt und einer automatischen Übernahme des Kupplungsspiels verbunden werden können; die Vorrichtung (1, 10) ist **dadurch gekennzeichnet, dass** der Kopf (12) des Schraubendrehers (10) eine kappenförmige Struktur (18) umfasst, die mit geformten Kanten (15) um den Umfang ausgestattet ist, und dass mindestens ein Paar der Wände (9) des Kopfs (12) mit den inneren Vorsprüngen (16) des inneren Hohlraums (7) des Bolzens zusammenpasst.

2. Die Vorrichtung nach Patentanspruch 1, **gekennzeichnet dadurch, dass** die Oberflächen (13) des Schraubendrehers (10) und die Oberfläche (22) der Wand (9) einander berührend verbunden werden können.

3. Die Vorrichtung nach den Patentansprüchen 1 oder 2, **gekennzeichnet dadurch, dass** der Kopf (12) des Schraubendrehers (10) im Wesentlichen die Form einer abgeschnittenen Pyramide hat und so geformt ist, dass er mit der Form des Hohlraums (7) zusammenpasst.

4. Die Vorrichtung nach den Patentansprüchen 1, 2 oder 3, **gekennzeichnet dadurch, dass** der Schraubendreher (10) eine Stange (14) umfasst, die am Kopf (12) befestigt ist und sich in einer axialen Lage befindet.

5. Die Vorrichtung nach Patentanspruch 4, **gekennzeichnet dadurch, dass** der Kopf (12) und die Stange (14) zusammen aus einem einzigen Körper geformt sind.

6. Die Vorrichtung nach Patentanspruch 1, **gekennzeichnet dadurch, dass** die geformten Kanten (15) um den Umfang der Kappe (18) Kerben (23) umfassen, die so geformt sind, dass sie mit den inneren Vorsprüngen (16) des Hohlraums (7) zusammenpassen.

7. Die Vorrichtung nach den Patentansprüchen 1 oder 6, **gekennzeichnet dadurch, dass** der Schraubendreher (10) eine Mehrzahl an konzentrischen Kappen (18) umfasst, die (10) wahlweise zum Eindrehen von Stopfen (1) unterschiedlicher Größen unter Verwendung eines einzigen Schraubendrehers verwendet werden können.

8. Die Vorrichtung nach einem der vorherigen Patentansprüche, **gekennzeichnet dadurch, dass** der Schraubendreher (10) aus Kunststoff gefertigt ist.

9. Die Vorrichtung nach einem der vorherigen Patentansprüche, **gekennzeichnet dadurch, dass** der Körper (3) des Stopfens (1) einen glatten, zylinderförmigen Hals (17b) aufweist, welcher dem Beginn des äußeren Gewindes (6) des Körpers (3) vorausgeht.

## Revendications

1. Un dispositif comprenant un bouchon fileté (1) et un tournevis (10) correspondant, dans lequel le bouchon (1) comprend une structure d'une seule pièce ayant un axe longitudinal (2) de symétrie, et comprenant une tête (5), un corps (3) présentant un filetage extérieur (6), et une bride de serrage (4) interposée entre la tête (5) et le corps (3) ; la structure dans laquelle la tête (5) a la forme d'un solide tubulaire (8) saillant de la bride (4) dans une direction parallèle à l'axe (2) du bouchon (1), et comprenant une cavité intérieure (7), accessible de l'extérieur à travers une extrémité du solide (8), la cavité (7) étant latéralement entourée par une surface non circulaire (22) d'une paroi annulaire (9) qui est oblique par rapport à l'axe (2) de la cavité (7) et divergeant de l'axe (2) le long d'une direction allant du corps (3) à la tête (5) du bouchon (1), le tournevis (10) comprenant une tête profilée (12) dotée de surfaces (13) qui peuvent être accouplées au moins avec la surface oblique (22) par contact direct et rattrapage automatique du jeu d'accouplement, le dispositif (1, 10) étant **caractérisé en ce que** la tête (12) du tournevis (10) comprend une structure en chapeau (18) dotée de bords périmétraux profilés (15) et au moins une paire de parois (9) de la tête (12) correspondent aux saillies intérieures (16) de la cavité intérieure (7) du bouchon.

2. Le dispositif selon la revendication 1, **caractérisé en ce que** les surfaces (13) du tournevis (10) et la surface (22) de la paroi (9) peuvent être accouplées par contact jumelé.

3. Le dispositif selon la revendication 1 ou 2, **caractérisé en ce que** la tête (12) du tournevis (10) a fondamentalement la forme d'une pyramide tronquée, conformée de manière à correspondre à la forme de la cavité (7).

4. Le dispositif selon la revendication 1 ou 2 ou 3, **caractérisé en ce que** le tournevis (10) comprend une barre (14) qui est fixée à la tête (12) et dans une position axiale.

5. Le dispositif selon la revendication 4, **caractérisé en ce que** la tête (12) et la barre (14) sont réalisés en un seul corps.

6. Le dispositif selon la revendication 1, **caractérisé en ce que** les bords périmétraux profilés (15) du chapeau (18) comprennent des échancrures (23) conformées de manière à correspondre aux saillies intérieures (16) de la cavité (7).

7. Le dispositif selon la revendication 1 ou 6, **caractérisé en ce que** le tournevis (10) comprend une pluralité de chapeaux (18) concentriques, qui peuvent être sélectivement utilisés pour visser des bouchons (1) de tailles différentes en utilisant un seul tournevis (10).

8. Le dispositif selon l'une quelconque des revendications précédentes, **caractérisé en ce que** le tournevis (10) est réalisé en matière plastique.

9. Le dispositif selon les revendications précédentes, **caractérisé en ce que** le corps (3) du bouchon (1) comprend un collier cylindrique lisse (17b) précédant le début du filetage extérieur (6) du corps (3).
